# EUROPÄISCHE PATENTSCHRIFT

(11) **EP 2 985 182 B1**
(45) Veröffentlichungstag und Bekanntmachung des Hinweises auf die Patenterteilung: **12.10.2022**
(21) Anmeldenummer: 15001657.4
(22) Anmeldetag: 03.06.2015
(51) Int. Cl.: B60Q 1/50, B60Q 1/22, B60Q 1/38, B60Q 1/48

(54) **VERFAHREN ZUR WARNUNG VON VERKEHRSTEILNEHMERN VOR MÖGLICHEN GEFAHRENBEREICHEN, DIE DURCH EIN FAHRZEUG ENTSTEHEN, DAS EIN FAHRMANÖVER AUSFÜHRT ODER AUSFÜHREN WILL**
METHOD FOR WARNING ROAD USERS OF POSSIBLE DANGEROUS AREAS CAUSED BY A VEHICLE PERFORMING A MANOEUVRE OR WHICH WANTS TO PERFORM A MANOEUVRE
PROCÉDÉ D'AVERTISSEMENT POUR DES UTILISATEURS D'UN RÉSEAU ROUTIER DE ZONES DE DANGER ÉVENTUELLES GÉNÉRÉES PAR UN VÉHICULE EFFECTUANT UNE MANOEUVRE

(30) Priorität: 12.08.2014 DE 102014011915
(43) Veröffentlichungstag der Anmeldung: 17.02.2016
(73) Patentinhaber: MAN Truck & Bus SE, 80995 München (DE)
(72) Erfinder: Elbs, Norbert, 80639 München (DE)
(74) Vertreter: Liebl, Thomas

(56) Entgegenhaltungen:
- WO-A1-2014/070047
- DE-A1-102006 048 503
- DE-A1-102006 059 684
- DE-A1-102011 119 923
- JP-A- 2005 161 977
- JP-A- 2008 143 505
- US-A1- 2003 146 827
- US-A1- 2011 128 141
- US-A1- 2014 172 239

## Beschreibung

Verfahren zur Warnung von Verkehrsteilnehmern vor möglichen Gefahrenbereichen, die durch ein Fahrzeug entstehen, das ein Fahrmanöver ausführt oder ausführen will.

Die Erfindung betrifft ein Verfahren zur Warnung von Verkehrsteilnehmern vor möglichen Gefahrenbereichen, die durch ein Fahrzeug entstehen, das ein Fahrmanöver ausführt oder ausführen will. Weiter betrifft die Erfindung eine Anordnung zur Durchführung des Verfahrens.

Fahrzeuge, insbesondere Nutzfahrzeuge, wie Busse und Lastkraftwagen sind durch ihre Größe und Form häufig für den Fahrer schwer zu überblicken, insbesondere, wenn dieser Fahrmanöver ausführt oder ausführen will. Fahrmanöver können dabei alle Manöver mit Ausnahme der "Geradeausfahrt vorwärts" sein. Darüber hinaus ist es für andere Verkehrsteilnehmer schwierig einzuschätzen, welchen Verkehrsraum ein solches Fahrzeug beim Ausführen eines Fahrmanövers belegen wird. Begibt sich ein Verkehrsteilnehmer in falscher Einschätzung der Situation in diesen zukünftig durch das Fahrzeug zu durchfahrenden, also belegten Verkehrsraum hinein, besteht akut die Gefahr einer Kollision.

Um den Einblick für den Fahrzeugführer zu verbessern sind bereits serienmäßig an solchen Fahrzeugen eine Vielzahl von Spiegeln angebracht. Weiter wurde bereits z. B. in der DE 298 18 214 U1 vorgeschlagen Kameraanordnungen am Fahrzeug vorzusehen und deren Bildsignal auf einer Anzeige darzustellen um dem Fahrer die Einsicht in das Geschehen zu erleichtern.

Eine andere zum Beispiel aus der DE 10 2007 049 821 A1, bzw. der DE 10 2012 006 679 A1 bekannte Maßnahme sieht vor, das Fahrzeugumfeld mittels Kameras und/ oder anderer Sensoren zu erfassen und zusammen mit dem eigenen Fahrzeug und dem zukünftig belegten Verkehrsraum auf einer Anzeige dem Fahrzeugführer darzustellen. Dies verbessert zwar die Informationslage des Fahrzeugführers, dieser muss aber die Darstellung auf der Anzeige in die Realität übertragen, was nicht immer leicht ist. Andere Verkehrsteilnehmer, die sich im Umfeld des Fahrzeugs befinden, wissen zudem nicht, ob sie sich im Gefahrenbereich aufhalten oder sich diesem nähern.

Um andere Verkehrsteilnehmer vor Gefahren zu warnen, wurde bereits vorgeschlagen, am Fahrzeug Signalquellen vorzusehen, die für diese Verkehrsteilnehmer wahrnehmbare Signale abgeben, um vor Gefahren wie Rückwärtsfahrt oder Abbiegevorgang zu warnen. So ist es beispielsweise aus der DE 20 2006 010 763 U1 bekannt, an der rechten Fahrzeugseite von Nutzfahrzeugen einen Licht- und Schallgeber vorzusehen, der bei einem Abbiegevorgang aktiviert wird und ein optisches und ein akustisches Signal abgibt, so dass im Gefahrenbereich befindliche Verkehrsteilnehmer, wie Fahrrad- oder Motoradfahrer, bzw. evtl. Fußgänger gewarnt werden. Diese Maßnahme verbessert zwar die Informationslage dieser Verkehrsteilnehmer, lässt sie aber im Unklaren, wo der eigentliche Gefahrenbereich liegt.

Weiter ist aus der DE 452425 A ein Fahrtrichtungsanzeiger für Fahrzeuge unter Verwendung einer in die jeweilige Fahrtrichtung einstellbaren Lichtquelle bekannt, wobei die Lichtquelle bei Dämmerung, Dunkelheit oder undurchsichtigem Wetter gerade oder seitlich voraus ein Richtungssymbol (Pfeil) auf den Boden (Fahrbahn) projiziert, das sich durch größere Helligkeit von seiner Umgebung abhebt.

Ein Verfahren und eine Anordnung zur Warnung von Verkehrsteilnehmern vor möglichen Gefahrenbereichen ist aus der US 2014/0172239 A1 bekannt. Die DE 10 2011 119 923 A1 beschreibt ein Beleuchtungssystem zur Projektion von zielgerichteten optischen Orientierungshilfen bzw. Mustern während des Betriebs.

Ausgehend von dem vorstehenden Stand der Technik ist es Aufgabe der Erfindung, ein Verfahren anzugeben, das einen Gefahrenbereich, der durch ein zukünftiges oder gerade begonnenes Fahrmanöver eines Fahrzeugs entsteht, dem Fahrzeugführer und anderen Verkehrsteilnehmern automatisch anzeigt. Weiter gehört es zur Aufgabe, eine Anordnung zur Durchführung des Verfahrens anzugeben.

Diese Aufgabe wird gelöst mit den Merkmalen der unabhängigen Patentansprüche. Vorteilhafte Ausgestaltungen sind Gegenstand der darauf rückbezogenen Unteransprüche.

Erfindungsgemäß ist ein Verfahren vorgesehen, das Verkehrsteilnehmer vor möglichen Gefahrenbereichen warnt, die durch ein Fahrzeug entstehen, das ein Fahrmanöver ausführt oder ausführen will. Unter einem Fahrmanöver sollen dabei alle Manöver eines Fahrzeugs verstanden werden, die eine Änderung des aktuellen (Fahr-)Status beinhalten. Das Verfahren sieht vor, dass eine Steuereinrichtung mittels wenigstens eines Sensors den Lenkwinkel des Fahrzeugs zyklisch abfragt, von einer Gangwahleinrichtung die Fahrtrichtung des Fahrzeugs zyklisch abfragt, aus dem Lenkwinkel und der Fahrtrichtung unter Zuhilfenahme eines im Zugriff der Steuereinrichtung stehenden Lenkmodells des Fahrzeugs zyklisch einen Verkehrsraum ermittelt, der bei Beibehaltung des Lenkeinschlags innerhalb einer vorgebbaren Zeit und Geschwindigkeit zukünftig belegt wird und mit den so gewonnenen Informationen über den zukünftig belegten Verkehrsraum wenigstens eine Projektionseinrichtung ansteuert derart, dass wenigstens ein Teil des zukünftig belegten Verkehrsraums durch eine Lichtprojektion auf die das Fahrzeug umgebende Bodenfläche sichtbar gemacht wird. Durch das Verfahren wird vorteilhaft erreicht, dass sowohl der Fahrzeugführer, als auch die am Verkehrsgeschehen um das Fahrzeug beteiligten Verkehrsteilnehmer, eine unmittelbare Information erhalten, wo der durch das bevorstehende oder in Ausführung befindliche Fahrmanöver des Fahrzeugs entstehende Gefahrenbereich liegt. Der Fahrzeugführer erkennt dabei unmittelbar, ob sich Gegenstände oder andere Verkehrsteilnehmer im Gefahrenbereich befinden und die anderen vom Fahrmanöver betroffenen Verkehrsteilnehmer erkennen, ob sie sich bereits im zukünftigen Gefahrenbereich befinden oder im Begriff sind, sich dorthin zu begeben. Stellt ein betroffener Verkehrsteilnehmer fest, dass er sich im Gefahrenbereich befindet oder sich darauf zu bewegt, kann er sich rechtzeitig in den sicheren Bereich begeben und ist nicht darauf angewiesen, dass der Fahrzeugführer die Gefahr erkennt und das Fahrmanöver abbricht.

In Weiterbildung des erfindungsgemäßen Verfahrens besteht die Möglichkeit, dass die Steuereinheit zusätzlich die tatsächliche Fahrzeuggeschwindigkeit des Fahrzeugs zyklisch abfragt und zur Ermittlung des zukünftig belegten Verkehrsraums heranzieht, so dass insbesondere bei schnellen Fahrmanövern, wie einem Spurwechseln auf einer Autobahn, der projizierte zukünftig belegte Verkehrsraum, in vorteilhafter Weise realistisch mit dem tatsächlich belegten Verkehrsraum übereinstimmt.

Um bei im Stillstand befindlichem Fahrzeug und fehlendem Lenkeinschlag, zum Beispiel wenn das Fahrzeug an einer Kreuzung wartet, um in eine vorfahrtsberechtigte Straße einzufahren oder bei bewegtem Fahrzeug und fehlendem Lenkeinschlag, zum Beispiel unmittelbar vor einem Spurwechsel auf einer Autobahn, also dann wenn ein Abbiegemanöver oder ein Spurwechsel bevorsteht, dennoch andere Verkehrsteilnehmer zu warnen, ist in Weiterbildung des Verfahrens vorgesehen, dass die Steuereinheit zusätzlich zum Lenkwinkel auch den Fahrtrichtungsanzeiger zyklisch abgefragt und dass bei gesetztem Fahrtrichtungsanzeiger und Stillstand des Fahrzeugs und/ oder unverändertem Lenkwinkel die Steuereinheit, in der Annahme eines zukünftigen Fahrmanövers in die durch den Fahrtrichtungsanzeiger angegebene Richtung, ein Verkehrsraum als zukünftig belegten Verkehrsraum aus Speicherwerten vorgibt und dass der so vorgegebene zukünftig belegte Verkehrsraum bei bewegtem Fahrzeug allmählich in den durch den tatsächlichen Lenkwinkel definierten zukünftig belegten Verkehrsraum übergeführt wird. Auf diese Weise wird vorteilhaft eine Warnung an eventuell betroffenen Verkehrsteilnehmer gegeben, bevor das Entstehen des Gefahrenbereichs aus dem Lenkwinkel ableitbar ist.

Gleichermaßen lässt sich ein zukünftig entstehender Gefahrenbereich unabhängig vom Lenkwinkel im Vorfeld vorteilhaft prognostizieren, wenn die Steuereinrichtung zusätzlich zum Lenkwinkel auch den von einem Navigationssystem vorgeschlagenen Streckenverlauf zyklisch abgefragt und zunächst den bei Verfolgung des vorgeschlagenen Streckenverlaufs anzunehmenden Lenkwinkel zur Ermittlung des zukünftig belegten Verkehrsraums heranzieht, wobei auch in diesem Fall der so angenommene zukünftig belegte Verkehrsraum bei bewegtem Fahrzeug allmählich in den durch den tatsächlichen Lenkwinkel definierten zukünftig belegten Verkehrsraum übergeführt wird. In einem solchen Fall wird selbstverständlich dann, wenn dem vom Navigationssystem vorgeschlagenen Streckenverlauf nicht gefolgt wird, ein sofortiges Umschalten auf den durch den tatsächlichen Lenkwinkel definierten zukünftig belegten Verkehrsraum vorgenommen.

Bei mehrgliedrigen Nutzfahrzeugen ist die Festlegung des zukünftig belegten Verkehrsraums nicht nur vom Lenkwinkel der gelenkten Achsen, sondern von der Gesamtkonstellation des Gespanns abhängig, so ist es bei Gelenkfahrzeugen erfindungsgemäß zielführend, dass die Steuereinrichtung zusätzlich zum Lenkwinkel auch den Gelenkwinkel zur Ermittlung des zukünftig belegten Verkehrsraums heranzieht. Entsprechend lässt sich bei Fahrzeugen mit Anhänger die zukünftig belegte Verkehrsfläche, zum Beispiel bei Rangiervorgängen, nur dann bestimmen, wenn die Steuereinrichtung zusätzlich zum Lenkwinkel der gelenkten Achsen auch den vorderen Deichselwinkel und den hinteren Deichselwinkel der Anhängerdeichsel zur Ermittlung des zukünftig belegten Verkehrsraums heranzieht.

Um die Auffälligkeit der Projektion und deren Informationsgehalt vorteilhaft zu erhöhen, wird in Erweiterung des erfindungsgemäßen Verfahrens vorgeschlagen, dass die Steuereinrichtung der Projektion des zukünftig belegten Verkehrsraums wenigstens eine zusätzliche Information überlagert. Die Projektion des zukünftig belegten Verkehrsraums und der zusätzlichen Information können dabei auch im Wechsel erfolgen.

Von besonderem Nutzen ist es, wenn die überlagerte Information eine grafische Information ist, weil das Erfassen grafischer Informationen, zum Beispiel grafischer Symbole, durch Menschen besonders schnell erfolgt. Von besonderem Vorteil ist es dabei, wenn das grafisehe Symbol eine bekannte, Gefahr signalisierende Bedeutung hat und insbesondere ein Stopp-Symbol ist.

Erfindungsgemäß erfolgt die Projektion des zukünftig belegten Verkehrsraums so, dass diese bereits einen Sicherheitsabstand berücksichtigt.

Zur Durchführung des Verfahrens ist eine Anordnung vorgesehen, die eine Steuereinrichtung in Form einer Datenverarbeitungseinrichtung enthält, wobei diese programmgestützt aus zumindest dem Lenkwinkel, den die Datenverarbeitungseinrichtung durch Abfrage eines Lenkwinkelsensors ermittelt und der gewählten Fahrtrichtung den die Datenverarbeitungseinrichtung über eine Fahrstufenwähleinrichtung ermittelt und einem in der Datenverarbeitungseinrichtung gespeicherten Lenkmodell des Fahrzeugs, den zukünftig innerhalb einer vorgebbaren Zeit belegten Verkehrsraum berechnen. Weiter ist wenigstens eine Projektionseinrichtung am Fahrzeug vorgesehen, die von der Datenverarbeitungseinrichtung mit der Information über den zukünftig belegten Verkehrsraum angesteuert wird derart, dass der zukünftig belegte Verkehrsraum durch eine Lichtprojektion auf die das Fahrzeug umgebende Bodenfläche angezeigt wird.

Um eine ausreichende Lichtstärke der Projektion auch bei Tageslicht zu erreichen, ist es Vorteilhaft, wenn die wenigstens eine Projektionseinrichtung wenigstens eine Laserlicht emittierende Laserquelle und wenigstens eine, den Laserstrahl innerhalb vorgegebener Grenzen ablenkende Ablenkeinrichtung beinhaltet. Abweichend hiervon könnte auch vorgesehen sein, dass die Laserquelle eine veränderliche, den zukünftig belegte Verkehrsraum abbildende Blende durchstrahlt.

Vorteilhaft ist die Laserquelle hinsichtlich der Intensität des Laserstrahls steuerbar, so dass auf diesem Wege eine Anpassung an unterschiedliche Lichtverhältnisse erfolgen kann. Dies kann beispielsweise durch ein Pulsen des Laserstrahl geschehen.

Zum Schutz anderer Verkehrsteilnehmer ist es von Vorteil, wenn die Anordnung des Emissionspunktes des Laserstrahls am Fahrzeug so getroffen ist, dass eine direkte Blendung von Verkehrsteilnehmern im Straßenverkehr ausgeschlossen ist. Der Emissionspunkt ist dabei bevorzugt am Fahrzeug möglichst bodennah angeordnet und strahlt schräg nach unten ab.

Die Steuerung der Intensität und/ oder der Ablenkung des Laserstrahls erfolgt vorteilhaft so, dass die einfallende Lichtmenge, beim Überstreichen eines menschlichen Auges durch den Laserstrahl, unter einer für menschliche Augen gesundheitsgefährdenden Größenordnung liegt. Ein Pulsen des Laserstrahls und/ oder eine hohe Ablenkfrequenz der Ablenkeinrichtung erlauben es, die Lichtmenge beim überstreichen eines menschlichen Auges zuverlässig unter einer zulässigen Größenordnung zu halten.

Um die den zukünftig belegten Verkehrsraum kennzeichnende Fläche als Ganzes sichtbar zu machen, ist es von Vorteil, wenn die Steuerung der Ablenkeinheit so ausgebildet ist, dass der Laserstrahl die den zukünftig belegten Verkehrsraum kennzeichnende Fläche rasterartig überstreicht. Dabei kann die Helligkeit der Projektion in vorteilhafter Weise dadurch erhöht werden, wenn die Steuerung der Ablenkeinheit so ausgebildet ist, dass wenigstens zwei aufeinander folgende Raster so gewählt sind, dass sich die Linien der Raster überschneiden. Durch diese Maßnahme erscheinen die Schnittpunkte dem integrierenden menschlichen Auge als besonders helle Punkte und erhöhen die Erkennbarkeit bei gleichzeitig geringer Intensität des Laserstrahls.

Abweichend von dem vorstehend beschriebenen flächigen Überstreichen der den zukünftig belegten Verkehrsraum kennzeichnenden Fläche oder zusätzlich dazu, besteht die Möglichkeit, die Steuerung der Ablenkeinheit so auszubilden, dass der Laserstrahl den Umriss der den zukünftig belegten Verkehrsraum kennzeichnende Fläche intermittierend oder kontinuierlich nachzeichnet, um die Sichtbarkeit vorteilhaft weiter zu erhöhen.

Es ist darauf hinzuweisen, dass die vorstehend und auch nachfolgend beschriebenen, Steuerungs-, Abfrage- oder Simulationszwecken dienenden Einrichtungen nicht zwangsläufig als Hardwarekomponenten ausgeführt sein müssen. Es ist vielmehr heute üblich, derartige Komponenten als Softwareroutinen auszubilden, die mittels Datenverarbeitungseinrichtungen ausgeführt werden. Heute übliche Fahrzeuge verfügen über eine Vielzahl solcher Datenverarbeitungseinrichtungen, die zur Datenübertragung miteinander vernetzt sind und unterschiedlichste Steuer-, Regel-, Analyse-, Klassifizierungs- und Datenübertragungsroutinen ausführen.

Einsetzbar ist das vorstehend beschriebene Verfahren, bzw. die vorstehend beschriebene Anordnung in Fahrzeugen, insbesondere Nutzfahrzeugen.

Weitere Ausgestaltungen und Vorteile der Erfindung werden nachfolgend anhand der Zeichnungen näher erläutert, für gleiche Objekte sind gleiche Bezugszeichen verwendet.

Es zeigen:
- Fig. 1: Eine Prinzipdarstellung eines mit einem Verfahren bzw. einer Anordnung zu Durchführung des Verfahrens ausgestatteten Fahrzeugs aus der Vogelperspektive und in Seitenansicht
- Fig. 2: Prinzipdarstellung einer Anordnung zur Durchführung des Verfahrens
- Fig. 3a: Eine Prinzipdarstellung der Winkelverhältnisse bei einem Sattelzug
- Fig. 3b: Eine Prinzipdarstellung der Winkelverhältnisse bei einem Lastkraftwagen mit Anhänger
- Fig. 4: Eine Prinzipdarstellung einer ersten Verkehrssituation in der Vogelperspektive
- Fig. 5: Eine Prinzipdarstellung einer zweiten Verkehrssituation in der Vogelperspektive
- Fig. 6a: Eine Prinzipdarstellung einer dritten Verkehrssituation in der Seitenansicht
- Fig. 6b: Eine Prinzipdarstellung einer dritten Verkehrssituation in der Vogelperspektive

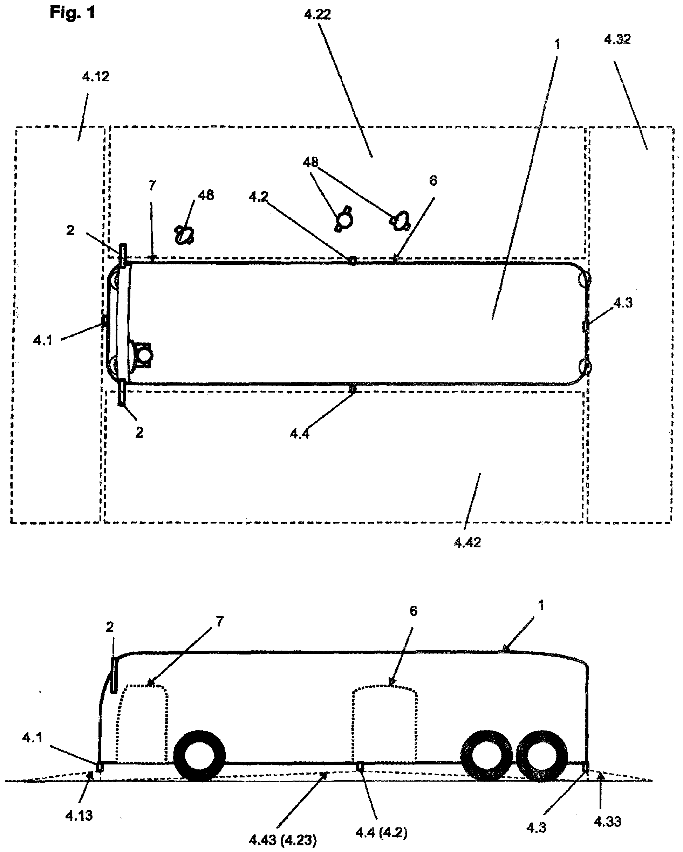

Zur Verdeutlichung der Gegebenheiten bei einem mit einem Verfahren bzw. einer Anordnung zu Durchführung des Verfahrens ausgestatteten Fahrzeugs, ist in Fig. 1 ein Stadtbus 1 in Vogelperspektive und Seitenansicht gezeigt. Wie üblich, ist der Stadtbus 1 mit Seitenspiegeln 2 ausgerüstet, die es dem Fahrer 3 gestatten, den rückwertigen Außenbereich einzusehen. Gemäß der Erfindung sind an dem Stadtbus 1 Projektionseinrichtungen 4.1, 4.2, 4.2, 4.4 angeordnet. Es befindet sich, wie aus der in der Fig. 1 oben dargestellten Vogelperspektive ersichtlich eine erste Projektionseinrichtung 4.1 in der Mitte des Frontbereichs, eine zweite Projektionseinrichtung 4.2 in der Mitte des rechten Seitenbereichs, eine dritte Projektionseinrichtung 4.3 in der Mitte des Heckbereichs und eine vierte Projektionseinrichtung 4.4 in der Mitte des rechten Seitenbereichs am Reisebus 1. Die in der Fig. 1 unten dargestellte Seitenansicht des Reisebusses 1 lässt erkennen, dass die Projektionseinrichtungen 4.1 bis 4.4, der Straßenoberfläche 5 zugewandt, am unteren Rand der Karosserie des Reisebusses 1 angeordnet sind. Die Projektionseinrichtungen sind dabei so ausgelegt, dass sie, wie durch die jeweils den Projektionseinrichtungen 4.1 bis 4.4 zugehörigen Strahlkegel 4.11, 4,21, 4,31, 4,41 verdeutlicht, Richtung Straßenoberfläche 5 abstrahlen. Weiter sind die Projektionseinrichtungen 4.1 bis 4.4 nach diesem Beispiel so ausgelegt, dass die Projektionseinrichtung 4.1 die Flächen 4.12, die Projektionseinrichtung 4.2 die Flächen 4.22, die Projektionseinrichtung 4.3 die Flächen 4.32 und die die Projektionseinrichtung 4.4 die Flächen 4.42 abdeckt. An der in Fahrtrichtung rechten Seite des Reisebusses 1 befinden sich eine hintere Einstiegstüre 6 und eine vordere Einstiegstüre 7, auf dieser rechten Seite sind weiter Personen 48 dargestellt die sich, wie aus dem oberen Teil der Darstellung ersichtlich, neben dem Stadtbus 1 befinden.

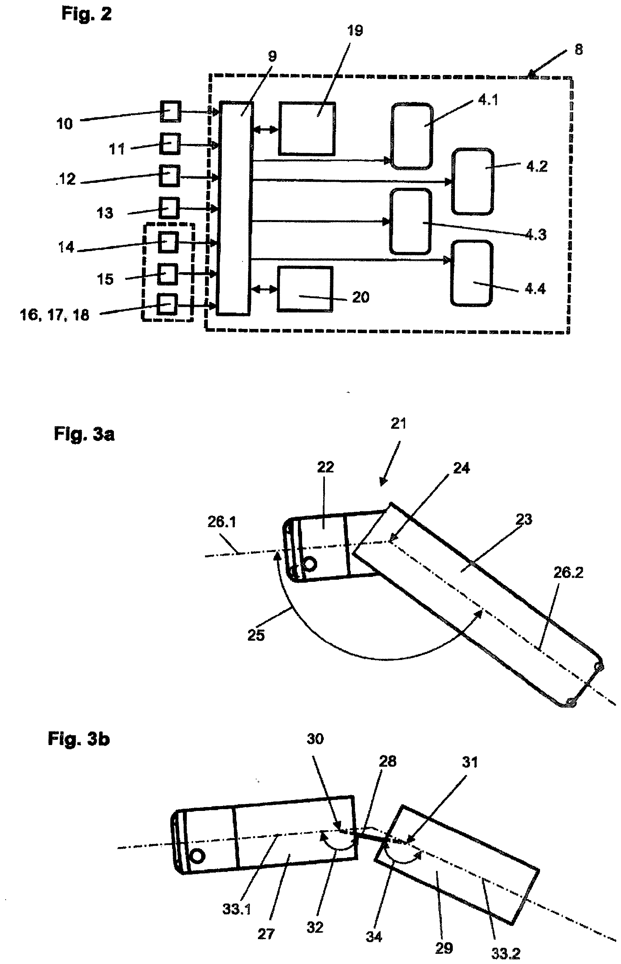

Ein Beispiel für die Anordnung zur Durchführung des erfindungsgemäßen Verfahrens zeigt Fig. 2 in Prinzipdarstellung, wobei die Funktionen jeweils in Form von Funktionsblöcken dargestellt sind. Es ist hier zu beachten, dass die Funktionsblöcke nicht zwangsläufig als Hardwarekomponenten ausgeführt sein müssen. Es ist vielmehr heute üblich, derartige Komponenten als Softwareroutinen auszubilden, die mittels Datenverarbeitungseinrichtungen ausgeführt werden, wobei sich diese geeigneter Sensoren, Aktuatoren und Schaltmittel bedient. Die gezeigten Funktionsblöcke werden dabei zumindest teilweise nur temporär ausgebildet, weil die in Fahrzeugen verwendete Steuereinrichtungen üblicherweise Datenverarbeitungseinrichtungen enthalten, die für unterschiedlichste Steuer- und Regelaufgaben herangezogen werden.

Fig. 2 zeigt eine Steuereinrichtung 8, die eine Datenverarbeitungseinrichtung 9 enthält. Diese fragt zyklisch über entsprechende Verbindungen einen Lenkwinkelsensor 10 hinsichtlich des Lenkwinkels, eine Fahrstufenwähleinrichtung 11 hinsichtlich der Fahrtrichtung (vorwärts oder rückwärts), Fahrtrichtungsanzeiger 12 (Blinker rechts oder links gesetzt?) zur Ermittlung eines genäherten wahrscheinlichen zukünftigen Lenkeinschlags und einen Geschwindigkeitssensor 13 hinsichtlich der Fahrzeuggeschwindigkeit ab. Je nach Fahrzeugtyp können auch noch weitere Einrichtungen abgefragt werden, wie Lenkwinkelsensoren 14 von eventuell vorhandenen weiteren gelenkten Achsen des Fahrzeugs, hinsichtlich deren Lenkwinkel, ein Navigationssystem hinsichtlich der vorgeschlagenen Fahrtroute um, zum Beispiel an Straßeneinmündungen, Kreuzungen, usw., daraus einen genäherten zukünftigen Lenkwinkel abzuleiten, ein Gelenkwinkelsensor 15, wenn es sich bei dem Fahrzeug um ein Gelenkfahrzeug, zum Beispiel einen Sattelschlepper handelt oder ein vorderer Deichselwinkelsensor 16 und ein hinterer Deichselwinkelsensor 17, wenn es sich um ein Fahrzeug mit Anhänger handelt.

Die Datenverarbeitungseinrichtung 9 nutzt die vorstehend angesprochenen zyklisch abgefragten Informationen als Ausgangsdaten für Lenksimulationen, wobei die Datenverarbeitungseinrichtung 9 auf ein Lenkmodell zurückgreift, das in ihrem Zugriff in einem Speicher 19 gespeichert ist. Unter einem Lenkmodell ist dabei ein Softwareverfahren zu verstehen, mit dem die Datenverarbeitungseinrichtung 9, unter Nutzung der oben angesprochenen Informationen (dem Lenkwinkel, der gewählten Fahrtrichtung, dem aus einem gesetzten Fahrtrichtungsanzeiger grob ableitbaren zukünftigen Lenkwinkel, und eventuell weiterer Lenkwinkel zusätzlicher gelenkter Achsen, dem aus der vorgeschlagenen Fahrtroute resultierenden zukünftigen Lenkwinkel, dem Gelenkwinkel oder den Deichselwinkeln) als Eingangsdaten, das Lenkverhalten des Fahrzeugs und daraus die zukünftig benötigte Verkehrsfläche rund um das Fahrzeug zyklisch ermittelt.

Ist die zukünftig belegte Verkehrsfläche ermittelt, überlagert die Datenverarbeitungseinrichtung 9 die Information, die die zukünftig belegte Verkehrsfläche definiert, mit einer Symbolinformation, die sie einem Symbolspeicher 20 entnimmt und steuert mit dieser kombinierten Information die bereits in Verbindung mit Fig. 1 erwähnten Projektionseinrichtungen 4.1, 4.2, 4.3, 4.4 (die Bezeichnung ist in allen Beispielen beibehalten) an. Diese überstreichen mit einer Lichtprojektion den jeweils ihnen zugeordneten Teil der Fläche um das Fahrzeug (vergleiche auch Fig. 1) und beleuchten den Teil der Fläche, der als zukünftig belegter Verkehrsraum definiert ist. Wie weit in die Zukunft der voraussichtlich belegte Verkehrsraum sichtbar gemacht wird, ist der Datenverarbeitungseinrichtung 9 durch eine Zeitvorgabe vorgebbar, die, verrechnet mit der Fahrzeuggeschwindigkeit, eine Fahrstrecke und unter Nutzung des Lenkmodells, eine zukünftig belegte Verkehrsfläche ergibt.

Um die Bedeutung des Gelenkwinkels bei Sattelschlepper, Gelenkbussen oder anderen Gelenkfahrzeugen zu verdeutlichen ist in Fig. 3a ein Sattelschlepper 21 gezeigt, der aus einem Maschinenwagen 22 und einem Auflieger 23 besteht. Der Auflieger 23 liegt auf einem Drehkranz (nicht dargestellt) des Maschinenwagens 22 auf, so dass sich ein Drehpunkt 24 ausbildet, um den der Auflieger 23 relativ zum Maschinenwagen 22 dreht. Wie unschwer ersichtlich können der Maschinenwagen 22 und der Auflieger 23 unterschiedliche Gelenkwinkel 25 relativ zueinander einnehmen, wobei hier der Gelenkwinkel 25 als Winkel zwischen den Längsmittelachsen 26.1, 26.2 durch Maschinenwagen bzw. Auflieger definiert ist.

Handelt es sich bei dem Fahrzeug um ein Gespann aus Lastkraftwagen und Anhänger, liegen wieder andere Verhältnisse vor, wie dies Fig. 3b zeigt. Hier ist ein Lastkraftwagen 27 im Sinne eines klassischen Gespanns mittels einer Deichsel 28 mit einem Anhänger 29 verbunden. Da die Deichsel 28 am Lastkraftwagen 27 drehbar befestigt ist und über die Lenkachse (nicht dargestellt) drehbar mit dem Anhänger 29, bilden sich ein erster Drehpunkt 30 am Lastkraftwagen 27 und ein zweiter Drehpunkt 31 am Anhänger 29 aus. Daraus resultiert ein vorderer Deichselwinkel 32 zwischen der Deichsel 28 und der Längsachse 33.1 des Lastkraftwagens 27 und ein hinterer Deichselwinkel 34 zwischen der Deichsel 28 und der Längsachse 33.2 des Anhängers 29. Da auch diese Winkel unterschiedliche Größe haben können, ist das Lenkverhalten des Gespanns neben dem Lenkwinkel des Lastkraftwagens 27 auch von dem vorderen Deichselwinkel 32 und dem hinteren Deichselwinkel 34 abhängig.

Unter Einbeziehung der vorstehend dargelegten Sachverhalte soll im Folgenden das Verfahren anhand einiger alltäglicher Verkehrssituationen erläutert werden, es wird dabei auch auf die Beschreibung zu den Figuren 1 und 2 zurückgegriffen.

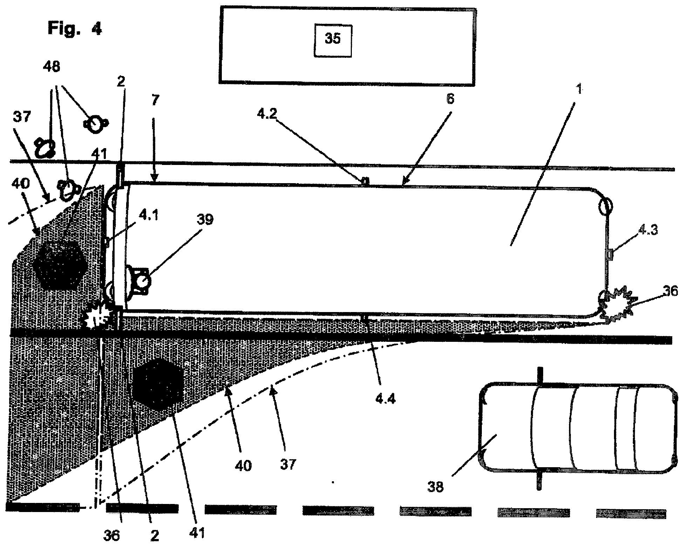

Fig. 4 zeigt, in Anlehnung an die Darstellung in Fig. 1, den Stadtbus 1 an einer Bushaltestelle 35. Der Stadtbus 1 ist abfahrbereit und hat die linken Blinker 36 gesetzt, ein Lenkeinschlag hat noch nicht stattgefunden. Aus dem Umstand der gesetzten Blinker 36 prognostiziert die Datenverarbeitungseinrichtung 9 (Fig. 2) einen bevorstehenden Lenkeinschlag nach links und nimmt zur Berechnung der zukünftig belegten Verkehrsfläche einen softwareseitig vorgebbaren Lenkwinkelbereich an. Mit diesem angenommenen Lenkwinkelbereich ermittelt die Datenverarbeitungseinrichtung im Wege einer Simulation, unter Zuhilfenahme des Lenkmodells aus dem Speicher 19 (Fig. 2), eine vorläufig als zukünftig belegten Verkehrsraum definierte Fläche und steuert damit die erste Projektionseinrichtung 4.1 und die vierte Projektionseinrichtung 4.4 an. Diese beleuchten, für andere Verkehrsteilnehmer, zum Beispiel den Fahrer des Fahrzeugs 38 und die Personen 48, wahrnehmbar, durch entsprechende Lichtemission die in Fig. 4 mittels strichpunktierter Umrisslinie 37 kenntlich gemachte Fläche. Auf die Art der Beleuchtung wird noch eingegangen.

Im Weiteren wird angenommen, dass im Zuge des Anfahrens des Stadtbusses 1 durch dessen Fahrer 39 ein Lenkeinschlag erfolgt ist und dieser Lenkeinschlag als Lenkwinkel im Rahmen der zyklischen Abfrage des Lenkwinkelsensors 10 (Fig. 2) Eingang in die Lenksimulation und damit in die Bestimmung des tatsächlich zukünftig belegten Verkehrsraums gefunden hat. Da der tatsächlich zukünftig belegte Verkehrsraum stets kleiner ist, als die im Vorfeld (siehe oben) als vorläufig zukünftig belegter Verkehrsraum angenommene Fläche, erfolgt die Anpassung der Projektion an die tatsächlichen Verhältnisse schrittweise. Nach Durchlaufen der Anpassung wird durch die erste Projektionseinrichtung 4.1 und die vierte Projektionseinrichtung 4.4 der in Figur 4 mit Punktraster dargestellte und von einer gestrichelten Linie 40 eingefasste Bereich wahrnehmbar beleuchtet. Zusätzlich erscheinen auf der durch die Projektion ausgeleuchteten Fläche zwei STOPP-Symbole 41, die so ausgerichtet sind, dass sie durch Verkehrsteilnehmer (Personen 48, Fahrer des Fahrzeugs 38) lesbar sind, die sich auf den Gefahrenbereich zubewegen.

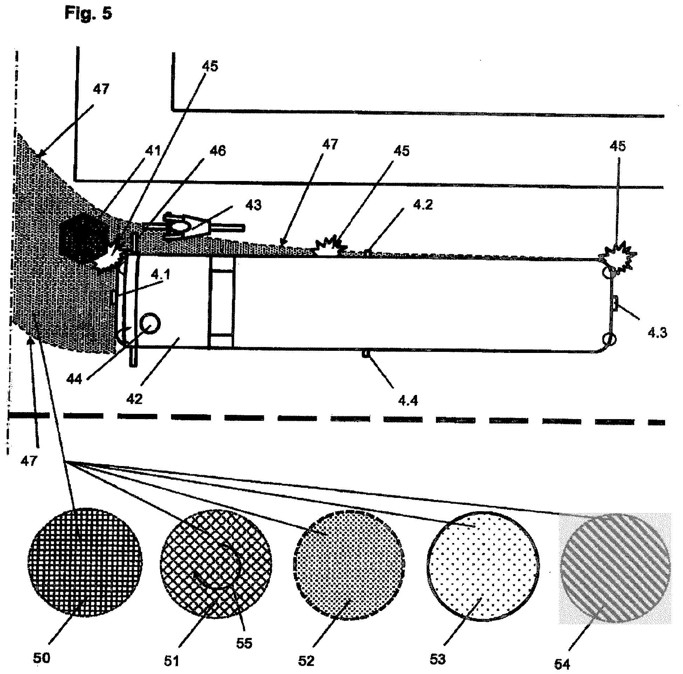

Die Darstellung in Fig. 5 zeigt eine zweite unfallträchtige Verkehrssituation, wie sie sich täglich einstellt. An einer Straßenkreuzung fährt ein LKW 42, hier ein Sattelschlepper, der nach rechts abbiegen will und dies durch gesetzte rechte Blinker 45 anzeigt. Neben diesem fährt ein Fahrradfahrer 43 in einer Position, in der er für den LKW-Fahrer 44 im rechten Seitenspiegel 46 wenn überhaupt, dann nur schlecht zu sehen ist. Obwohl der LKW-Fahrer 44 noch keinen Lenkeinschlag vorgenommen hat, prognostiziert die Datenverarbeitungseinrichtung 9 (Fig. 2), ausgelöst durch die gesetzten rechten Blinker 45, einen bevorstehenden Lenkeinschlag nach rechts und nimmt zur Berechnung der zukünftig belegten Verkehrsfläche einen softwareseitig vorgebbaren Lenkwinkelbereich an. Mit diesem angenommenen Lenkwinkelbereich ermittelt die Datenverarbeitungseinrichtung im Wege einer Simulation, unter Zuhilfenahme des Lenkmodells aus dem Speicher 19 (Fig. 2), eine vorläufig als zukünftig belegten Verkehrsraum definierte Fläche und steuert damit die erste Projektionseinrichtung 4.1 und die zweite Projektionseinrichtung 4.2 an, die durch entsprechende Lichtemission die in Fig. 5 mittels gestrichelter Umrisslinie 47 kenntlich gemachte und mit Punktraster belegte Fläche für andere Verkehrsteilnehmer, zum Beispiel den Fahrradfahrer 43, wahrnehmbar beleuchten. Wie aus der Darstellung ersichtlich, befindet sich der Fahrradfahrer 43 bereits im Gefahrenbereich und könnte, wenn er seinen Standort nicht ändert und der LKW-Fahrer 44 die Gefahr nicht erkennt, vom Fahrrad gestoßen oder durch die hinteren rechten Räder des LKW 42 überrollt werden. Die Projektion des voraussichtlich belegten zukünftigen Verkehrsraums, zusammen mit der überlagerten Projektion eines STOPP-Symbols 41, zeigt dem Fahrradfahrer 43 unübersehbar an, dass er sich im Gefahrenbereich befindet und gibt ihm Gelegenheit, sich in einen sicheren Abstand zum LKW 42 zu begeben.

Was die vorstehend wiederholt angesprochen Projektionseinrichtungen 4.1 bis 4.4 angeht, so sind zu deren Realisierung unterschiedliche Technologien einsetzbar. Vom Einsatz eines konventioneller Beleuchtungskörpers mit einer entsprechenden Optik, die eine veränderliche Blende durchstrahlt, wobei deren Apertur so gesteuert ist, dass sie den zukünftig belegten Verkehrsraum als auf die Straße projizierte Leuchtfläche abbildet, über Stroboskop - Blitzlichter als Beleuchtungskörper mit ähnlicher Optik und Blende, bis hin zu Laserprojektoren mit einer oder mehreren Laserquellen und einer oder mehreren Ablenkeinrichtungen für den Laserstrahl bzw. die Laserstrahlen. Aufgrund der hohen Leuchtdichte, Fokussierung und Steuerbarkeit bzw. Ablenkbarkeit des Strahls bieten sich allerdings Laserprojektoren bevorzugt als Projektionseinrichtungen an. Da alle vorstehend genannten Technologien marktverfügbar sind, erübrigt sich eine ausführliche Beschreibung.

Wird nun für das Beispiel nach Fig. 5 vorausgesetzt, dass sie die Projektionseinrichtungen 4.1 bis 4.4 der angesprochenen Lasertechnologie bedienen, ergeben sich unterschiedlichste Möglichkeiten, die als zukünftig belegter Verkehrsraum definierte Fläche zu gestalten. Einige Gestaltungsbeispiele sind in der Fig. 5 unten in Kreisen dargestellt.

Beispiel 50 zeigt eine rasterartige Struktur wobei die Rasterlinien, die den Weg des abgelenkten Laserstrahls symbolisieren, engmaschig angelegt sind und sich im rechten Winkel überschneiden. Durch die Überschneidungen und die Feinmaschigkeit ergibt sich für das menschliche Auge, bei vergleichsweise geringer Laserleistung, eine hohe Leuchtdichte. Entsprechendes gilt für Beispiel 51, hier ist die Maschenweite größer gewählt, was aber durch die mittels Pfeil 55 angedeutete ständige Änderung der Orientierung des Rasters kompensiert wird.

Eine andere Möglichkeit der Gestaltung zeigt Beispiel 52. Hier ist ein mittels gepulstem Laser erzeugtes Punktraster gezeigt, wobei die ausgeleuchtete Fläche durch eine hervorgehobene intermittierende Umrisslinie begrenzt ist. Eine solche Gestaltung macht die Grenzen des zukünftig belegten Verkehrsraums besonders deutlich. Entsprechendes gilt für das Beispiel 53 hier ist die Umrisslinie nicht unterbrochen und das Punktraster weniger dicht, so dass die Grenze des zukünftig belegten Verkehrsraums besonders betont wird.

Schließlich besteht die Möglichkeit, einen weniger stark fokussierten Laserstrahl zu verwenden, der ein Linienmuster mit breiten Linien bildet, wie dies Beispiel 54 zeigt.

Die vorstehenden Beispiele zeigen nur einen kleinen Ausschnitt der Gestaltungsmöglichkeiten hinsichtlich der Ausleuchtung der Fläche, die den zukünftig belegten Verkehrsraum anzeigt. Für alle Ausgestaltungen der Ausleuchtung muss indes gelten, dass die Intensität des Laserstrahls unterhalb einer gesundheitsgefährdenden Größenordnung zu wählen ist.

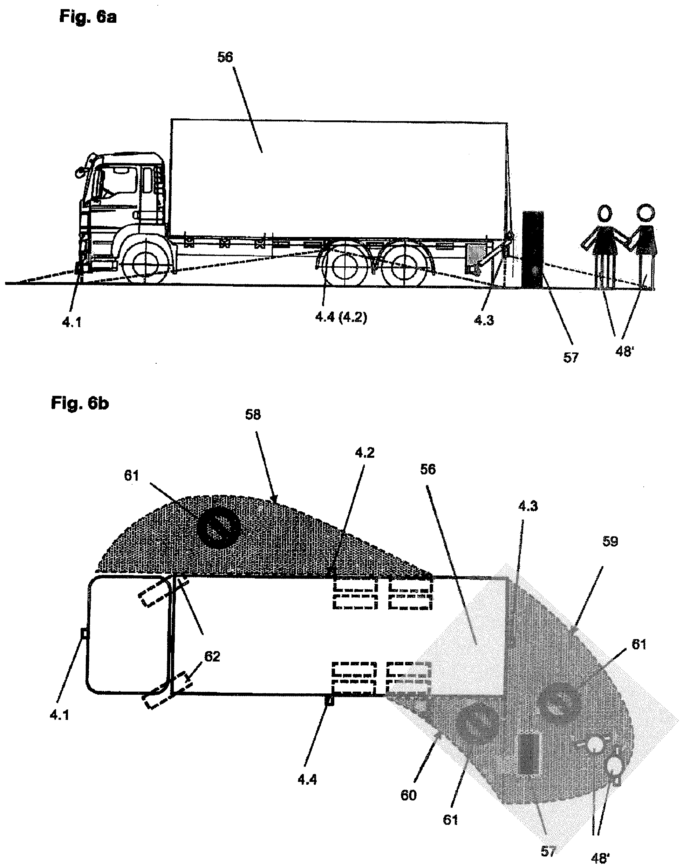

Als weitere Sicherheitsmaßnahme ist, wie bereits in Figur 1 unten gezeigt und auch aus der nachfolgend näher beschriebenen Fig. 6a ersichtlich, der Anbringungsort, insbesondere für Laserprojektoren, möglichst an der unteren Karosseriekante mit Abstrahlrichtung zur Fahrbahnoberfläche hin zu wählen. Hinsichtlich der Anzahl der anzubringenden Projektionseinrichtungen kommt dies auf den verfolgten Zweck an. Soll beispielsweise nur das Ausfahren eines Stadtbusses aus einer Haltestelle abgesichert werden, genügt eine an dessen linker Längsseite angeordnete Projektionseinrichtung, sollen zusätzlich Personen vor dem Stadtbus gewarnt werden, ist eine Projektionseinrichtung an dessen Frontseite erforderlich (vergleiche Fig. 4). Für die Warnung von zum Beispiel Radfahrern beim Rechtsabbiegen eines LKW genügt ebenfalls nur eine Projektionseinrichtung an dessen rechter Längsseite. Sollen zusätzlich Verkehrsteilnehmer im Frontbereich des LKW gewarnt werden, ist eine zusätzlich Projektionseinrichtung an dessen Frontseite erforderlich (vergleiche Fig. 5).

In bestimmten Fällen kann es für eine rundum Absicherung notwendig sein, auch mehr als vier Projektionseinrichtungen zu verwenden. Dies ist beispielsweise bei Sattelzügen oder Lastkraftwagen mit Anhängern der Fall. Zum einen kann der Maschinenwagen beim Sattelschlepper auch alleine, also ohne Auflieger gefahren werden, ebenso der Lastkraftwagen ohne Anhänger. Andererseits verhindert, beim Fahren im Verbund, das Abknicken des Auflieger bzw. Anhängers zum Beispiel beim Rangieren, dass eine nur am Maschinenwagen bzw. Lastkraftwagen jeweils beidseitig angeordnete Projektionseinrichtung, die zukünftig beanspruchte Verkehrsfläche in dem durch den Auflieger bzw. Anhänger abgeschatteten Bereich ausleuchtet. In diesen Fällen sind am Motorwagen bzw. am Lastkraftwagen vier Projektionseinrichtungen vorzusehen und am Auflieger bzw. Anhänger drei.

Um die Verhältnisse beim Rangieren eines Verteilerfahrzeugs aufzuzeigen, ist in Fig. 6a ein solches Verteilerfahrzeug 56 dargestellt. An seiner Karosserieunterkante befinden sich Projektionseinrichtungen 4.1', 4.2', 4.3', 4.4'. Die Ausleuchtkegel der Projektionseinrichtungen sind jeweils durch gestrichelte Linien angedeutet. Hinter dem Verteilerfahrzeug 56 befinden sich Personen 48' und ein Packstück 57.

Wie die Fig. 6b anhand der Stellung der Vorderräder 62 zeigt, hat der Fahrer des Verteilerfahrzeugs 56 bereits einen Lenkeinschlag vollzogen und will zurückstoßen. Dazu hat er eine Fahrstufenwähleinrichtung 11 (Fig. 2) betätigt und einen Rückwärtsgang eingelegt. Aus der Abfrage des Lenkwinkelsensors 10 und der Fahrstufenwähleinrichtung 11 (jeweils Fig. 2) ermittelt die Datenverarbeitungseinrichtung 9 (Fig.2) Lenkwinkel und Fahrtrichtung und simuliert ein Zurückstoßen mittels des Lenkmodells und des Lenkwinkels als Eingangsgröße (siehe hierzu Beschreibung zu Fig. 2). Ergebnis der Simulation ist eine Definition der Bereiche, die beim Zurückstoßen vom Verteilerfahrzeug 56 überfahren werden. Dieser Information wird ein grafisches Symbol überlagert und mit der Kombination werden die Projektionseinrichtungen 4.2, 4.3, 4.4 angesteuert, die ihrerseits den zukünftig belegten Verkehrsraum auf die das Verteilerfahrzeug umgebende Bodenfläche projizieren. Dabei projiziert die Projektionseinrichtung 4.2 den ersten Bereich 58, die Projektionseinrichtung 4.3 den zweiten Bereich 59 und die Projektionseinrichtung 4.4 den dritten Bereich 60. In den vorstehend genannten Bereichen ist, jeweils überlagert, ein Symbol 61 dargestellt, das "nicht betreten!" signalisiert.

Wie aus der Darstellung ersichtlich, befinden sich die Personen 48', sowie das Packstück 57 im benötigten Verkehrsraum, durch die Lichtprojektion werden die Personen 48' darauf aufmerksam gemacht. Gleichzeitig kann der Fahrer des Verteilerfahrzeugs 56 im Rückspiegel erkennen, dass bei dem gewählten Lenkeinschlag das geplante Fahrmanöver nicht durchführbar ist und hat die Möglichkeit, gewissermaßen interaktiv, den Lenkeinschlag so zu korrigieren, dass sein Rückstoßmanöver durchgeführt werden kann. Interaktiv deshalb, weil die Wirkung der Änderung des Lenkeinschlags unmittelbar an der Lichtprojektion ablesbar ist.

### Bezugszeichenliste

- 1: Stadtbus
- 2: Seitenspiegel
- 3: Fahrer
- 4.1, 4.2, 4.3, 4.4: erste bis vierte Projektionseinrichtung
- 4.11, 4.21, 4.31, 4.41: erster bis vierter Strahlkegel
- 4.12, 4.22, 4,32, 4.42: erste bis vierte Fläche
- 5: Straßenoberfläche
- 6: hintere Einstiegstür
- 7: vordere Einstiegstür
- 8: Steuereinrichtung
- 9: Datenverarbeitungseinrichtung
- 10: Lenkwinkelsensor
- 11: Fahrstufenwähleinrichtung
- 12: Fahrtrichtungsanzeiger
- 13: Geschwindigkeitssensor
- 14: Lenkwinkelsensor
- 15: Gelenkwinkelsensor
- 16: vorderer Deichselwinkelsensor
- 17: hinterer Deichselwinkelsensor
- 19: Speicher
- 20: Symbolspeicher
- 21: Sattelschlepper
- 22: Maschinenwagen
- 23: Auflieger
- 24: Drehpunkt
- 25: Gelenkwinkel
- 26.1,26.2: Längsmittelachsen
- 27: Lastkraftwagen
- 28: Deichsel
- 29: Anhänger
- 30: erster Drehpunkt
- 31: zweiter Drehpunkt
- 32: vorderer Deichselwinkel
- 33.1, 33.2: Längsachsen
- 34: hinterer Deichselwinkel
- 35: Bushaltestelle
- 36: linke Blinker
- 37: strichpunktierte Umrisslinie
- 38: Fahrzeug
- 39: Fahrer
- 40: gestrichelte Linie
- 41: STOPP-Symbol
- 42: LKW
- 43: Fahrradfahrer
- 44: LKW-Fahrer
- 45: rechte Blinker
- 46: rechter Seitenspiegel
- 47: gestrichelte Umrisslinie
- 48, 48': Personen
- 50 bis 54: erstes bis viertes Beispiel
- 55: Pfeil
- 56: Verteilerfahrzeug
- 57: Packstück
- 58: erster Bereich
- 59: zweiter Bereich
- 60: dritter Bereich
- 61: Symbol

## Patentansprüche

1. Verfahren zur Warnung von Verkehrsteilnehmern vor möglichen Gefahrenbereichen, die durch ein Fahrzeug entstehen, das ein Fahrmanöver ausführt, wobei das Fahrzeug ein Gelenkfahrzeug ist und wobei eine Steuereinrichtung (8) vorgesehen ist, die
- mittels wenigstens eines Lenkwinkelsensors (10) den Lenkwinkel des Fahrzeugs zyklisch abfragt,
- von einer Fahrstufenwähleinrichtung (11) die Fahrtrichtung zyklisch abfragt,
- aus dem Lenkwinkel und der Fahrtrichtung unter Zuhilfenahme eines im Zugriff der Steuereinrichtung (8) stehenden Lenkmodells des Fahrzeugs zyklisch einen Verkehrsraum ermittelt, der bei Beibehaltung des Lenkeinschlags innerhalb einer vorgebbaren Zeit und Geschwindigkeit zukünftig belegt wird, wobei die Steuereinrichtung (8) bei Gelenkfahrzeugen zusätzlich zum Lenkwinkel auch den Gelenkwinkel zyklisch ermittelt und zur Ermittlung des zukünftig belegten Verkehrsraums heranzieht,
- mit den so gewonnenen Informationen über den zukünftig belegten Verkehrsraum wenigstens eine Projektionseinrichtung (4.1, 4.2, 4.3, 4.4) dergestalt ansteuert, dass wenigstens ein Teil des zukünftig belegten Verkehrsraums durch eine Lichtprojektion auf die das Fahrzeug umgebende Bodenfläche sichtbar gemacht wird, wobei die Projektion des zukünftig belegten Verkehrsraums einen Sicherheitsabstand berücksichtigt.

2. Verfahren nach Anspruch 1, **dadurch gekennzeichnet, dass** die Steuereinheit (8) zusätzlich über einen Geschwindigkeitssensor die tatsächliche Fahrzeuggeschwindigkeit zyklisch abfragt und zur Ermittlung des zukünftig belegten Verkehrsraums heranzieht.

3. Verfahren nach Anspruch 1 oder 2, **dadurch gekennzeichnet, dass** die Steuereinheit (8) zusätzlich zum Lenkwinkel auch den Fahrtrichtungsanzeiger (12) zyklisch abfragt und dass bei gesetztem Fahrtrichtungsanzeiger (12) und Stillstand des Fahrzeugs und/oder unverändertem Lenkwinkel die Steuereinheit (8) ein zukünftiges Fahrmanöver in die durch den Fahrtrichtungsanzeiger (12) angegebene Richtung prognostiziert und ein Verkehrsraum als zukünftig belegten Verkehrsraum aus Speicherwerten vorgibt und dass der so vorgegebene zukünftig belegte Verkehrsraum bei bewegtem Fahrzeug in den durch den tatsächlichen Lenkwinkel definierten zukünftig belegten Verkehrsraum überführt wird.

4. Verfahren nach einem der vorhergehenden Ansprüche, **dadurch gekennzeichnet, dass** die Steuereinrichtung (8) zusätzlich zum Lenkwinkel auch den von einem Navigationssystem vorgeschlagenen Streckenverlauf zyklisch abfragt und zunächst den bei Verfolgung des vorgeschlagenen Streckenverlaufs anzunehmenden Lenkwinkel zur Ermittlung des zukünftig belegten Verkehrsraums heranzieht und dass der so angenommene zukünftig belegte Verkehrsraum bei bewegtem Fahrzeug in den durch den tatsächlichen Lenkwinkel definierten zukünftig belegten Verkehrsraum überführt wird.

5. Verfahren nach einem der vorhergehenden Ansprüche, **dadurch gekennzeichnet, dass** die Steuereinrichtung (8) bei Fahrzeugen mit Anhängern zusätzlich zum Lenkwinkel auch den vorderen Deichselwinkel und den hinteren Deichselwinkel der Anhängerdeichsel zyklisch ermittelt und zur Ermittlung des zukünftig belegten Verkehrsraums heranzieht.

6. Verfahren nach einem der vorhergehenden Ansprüche, **dadurch gekennzeichnet, dass** die Steuereinrichtung (8) der Projektion des zukünftig belegten Verkehrsraums wenigstens eine zusätzliche Information überlagert.

7. Verfahren nach Anspruch 6, **dadurch gekennzeichnet, dass** die Projektion des zukünftig belegten Verkehrsraums und der zusätzlichen Information im Wechsel erfolgen und/oder dass es sich bei der überlagerten Information um eine grafische Information handelt, wobei bevorzugt vorgesehen ist, dass die grafische Information ein STOPP-Symbol ist.

8. Anordnung zur Durchführung des Verfahrens nach einem der vorhergehenden Ansprüche, wobei als Steuereinrichtung (8) eine Datenverarbeitungseinrichtung (9) vorgesehen ist, die aus zumindest dem Lenkwinkel, den sie über einen Lenkwinkelsensor (10) ermitteln kann und der gewählten Fahrtrichtung, die sie über eine Fahrstufenwähleinrichtung (11) ermitteln kann und einem in einem Speicher (19) der Steuereinrichtung (8) gespeicherten Lenkmodell des Fahrzeugs, den zukünftig innerhalb einer vorgebbaren Zeit belegten Verkehrsraum berechnen kann, wobei die Steuereinrichtung (8) bei Gelenkfahrzeugen zusätzlich zum Lenkwinkel auch den Gelenkwinkel zyklisch ermittelt und zur Ermittlung des zukünftig belegten Verkehrsraums heranzieht, und wobei wenigstens eine Projektionseinrichtung (4.1, 4.2, 4.3, 4.4) am Fahrzeug vorgesehen ist, die mit der Information über den zukünftig belegten Verkehrsraum angesteuert wird derart, dass der zukünftig belegte Verkehrsraum durch eine Lichtprojektion auf die das Fahrzeug umgebende Bodenfläche angezeigt wird, wobei die Projektion des zukünftig belegten Verkehrsraums einen Sicherheitsabstand berücksichtigt.

9. Anordnung nach Anspruch 8, **dadurch gekennzeichnet, dass** die wenigstens eine Projektionseinrichtung (4.1, 4.2, 4.3, 4.4) wenigstens eine Laserlicht emittierende Laserquelle und wenigstens eine den Laserstrahl innerhalb vorgegebener Grenzen ablenkenden Ablenkeinrichtung beinhaltet, wobei bevorzugt vorgesehen ist, dass die Laserquelle hinsichtlich der Intensität des Laserstrahls steuerbar ist.

10. Anordnung nach Anspruch 9, **dadurch gekennzeichnet, dass** die Steuerung der Intensität und/ oder der Ablenkung des Laserstrahls so erfolgt, dass die Strahlendosis beim Überstreichen eines menschlichen Auges durch den Laserstrahl unter einer für menschliche Augen gesundheitsgefährdenden Dosis liegt, und/oder dass die Steuerung der Ablenkeinheit so ausgebildet ist, dass der Laserstrahl die den zukünftig belegten Verkehrsraum kennzeichnende Fläche rasterartig überstreicht, wobei bevorzugt vorgesehen ist, dass die Steuerung der Ablenkeinheit so ausgebildet ist, dass wenigstens zwei aufeinander folgende Raster so gewählt sind, dass sich die Linien der Raster überschneiden.

11. Anordnung nach Anspruch 9 oder 10, **dadurch gekennzeichnet, dass** die Steuerung der Ablenkeinheit so ausgebildet ist, dass der Laserstrahl den Umriss der den zukünftig belegten Verkehrsraum kennzeichnenden Fläche intermittierend nachzeichnet, und/oder dass die Steuerung der Ablenkeinheit so ausgebildet ist, dass der Laserstrahl den Umriss der den zukünftig belegten Verkehrsraum kennzeichnenden Fläche kontinuierlich nachzeichnet.

12. Fahrzeug, insbesondere Nutzfahrzeug, mit einer Anordnung nach einem der Ansprüche 8 bis 11.

## Claims

1. Method for warning road users of potential danger areas caused by a vehicle that is carrying out a driving manoeuvre, wherein the vehicle is an articulated vehicle and wherein a control device (8) is provided that
- cyclically retrieves the steering angle of the vehicle by means of at least one steering angle sensor (10),
- cyclically retrieves the direction of travel from a driving speed selector (11),
- cyclically determines, from the steering angle and the direction of travel by using a steering model of the vehicle that is accessible to the control device (8), a road space that will be occupied in the future within a specifiable time and speed in the event the steering angle is maintained, wherein the control device (8) in articulated vehicles also cyclically ascertains, in addition to the steering angle, the articulation angle and uses the future occupied road space for the ascertainment,
- controls at least one projection device (4.1, 4.2, 4.3, 4.4) with the information about the future occupied road space thus obtained such that at least part of the future occupied road space is made visible by a light projection onto the ground surface surrounding the vehicle, wherein the projection of the future occupied road space takes into account a safety distance.

2. Method according to Claim 1, **characterized in that** the control unit (8) additionally cyclically retrieves the actual speed of the vehicle by means of a speed sensor and uses it to ascertain the future occupied road space.

3. Method according to Claim 1 or 2, **characterized in that** the control unit (8), in addition to the steering angle, also cyclically polls the turn indicator (12) and **in that** with the turn indicator (12) activated and the vehicle stationary and/or the steering angle unchanged, the control unit (8) predicts a future driving manoeuvre in the direction specified by the turn indicator (12) and specifies a road space as a future occupied road space from memory values, and **in that** the future occupied road space thus specified is transformed into the future occupied road space defined by the actual steering angle while the vehicle is moving.

4. Method according to any one of the preceding claims, **characterized in that** the control device (8), in addition to the steering angle, also cyclically retrieves the route proposed by a navigation system and initially uses the steering angle to be adopted when following the proposed route to ascertain the future occupied road space, and **in that** the future occupied road space thus assumed is transformed into the future occupied road space defined by the actual steering angle while the vehicle is moving.

5. Method according to any one of the preceding claims, **characterized in that**, in addition to the steering angle, the control device (8) in vehicles with trailers also cyclically ascertains the front tow bar angle and the rear tow bar angle of the trailer tow bar and uses them to ascertain the future occupied road space.

6. Method according to any one of the preceding claims, **characterized in that** the control device (8) overlays the projection of the future occupied road space with at least one item of additional information.

7. Method according to Claim 6, **characterized in that** the projection of the future occupied road space and the additional information are carried out alternately and/or **in that** the overlaid information is graphical information, wherein the graphical information is preferably a STOP symbol.

8. Arrangement for carrying out the method according to any one of the preceding claims, wherein a data processing device (9) is provided as the control device (8), which can calculate the future road space to be occupied within a specifiable time from at least the steering angle, which it can ascertain by means of a steering angle sensor (10), and the selected direction of travel, which it can ascertain by means of a driving speed selector (11), and a steering model of the vehicle that is stored in a memory (19) of the control device (8), wherein the control device (8) in articulated vehicles also cyclically ascertains, in addition to the steering angle, the articulation angle and uses it to ascertain the future occupied road space, and wherein at least one projection device (4.1, 4.2, 4.3, 4.4) is provided on the vehicle, which is controlled with the information about the future occupied road space such that the future occupied road space is indicated by a light projection onto the ground surface surrounding the vehicle, wherein the projection of the future occupied road space takes into account a safety distance.

9. Arrangement according to Claim 8, **characterized in that** the at least one projection device (4.1, 4.2, 4.3, 4.4) contains at least one laser source that emits laser light and at least one deflecting device that deflects the laser beam within specified limits, wherein the laser source is preferably controllable with respect to the intensity of the laser beam.

10. Arrangement according to Claim 9, **characterized in that** the control of the intensity and/or of the deflection of the laser beam is carried out such that the radiation dose when the laser beam sweeps across a human eye lies below a dose that is hazardous to the health of human eyes, and/or **in that** the control of the deflection unit is designed such that the laser beam sweeps across the area identifying the future occupied road space in a raster pattern, wherein the control of the deflection unit is preferably designed such that at least two successive rasters are selected such that the lines of the rasters intersect.

11. Arrangement according to either one of Claims 9 and 10, **characterized in that** the control of the deflection unit is designed such that the laser beam intermittently traces the outline of the area identifying the future occupied road space, and/or **in that** the control of the deflection unit is designed such that the laser beam continuously traces the outline of the area identifying the future occupied road space.

12. Vehicle, in particular commercial vehicle, with an arrangement according to any one of Claims 8 to 11.

## Revendications

1. Procédé pour alerter des usagers du trafic de zones de danger possibles, lesquelles sont provoquées par un véhicule qui effectue une manœuvre de conduite, le véhicule étant un véhicule articulé et un dispositif de commande (8) étant présent, lequel
- interroge cycliquement l'angle de braquage du véhicule au moyen d'au moins un capteur d'angle de braquage (10),
- interroge cycliquement le sens de déplacement d'un dispositif de sélection de cran de marche (11),
- détermine cycliquement, à partir de l'angle de braquage et du sens de déplacement à l'aide d'un modèle de direction accessible au dispositif de commande (8), un espace de circulation qui, en conservant le braquage de direction, sera occupé dans l'avenir au sein d'un temps et d'une vitesse pouvant être prédéfinis, le dispositif de commande (8) déterminant aussi cycliquement pour les véhicules articulés, en plus de l'angle de braquage, l'angle d'articulation et l'utilisant pour déterminer le futur espace de circulation occupé,
- avec les informations ainsi obtenues à propos du futur espace de circulation occupé, commande au moins un dispositif de projection (4.1, 4.2, 4.3, 4.4) de telle sorte qu'au moins une partie du futur espace de circulation occupé est rendue visible par une projection de lumière sur la surface de sol entourant le véhicule, la projection du futur espace de circulation occupé tenant compte d'un écart de sécurité.

2. Procédé selon la revendication 1, **caractérisé en ce que** l'unité de commande (8) interroge en plus cycliquement la vitesse effective du véhicule par le biais d'un capteur de vitesse et l'utilise pour déterminer le futur espace de circulation occupé.

3. Procédé selon la revendication 1 ou 2, **caractérisé en ce que** l'unité de commande (8), en plus de l'angle de braquage, interroge également cycliquement l'indicateur de direction (12) et **en ce que** dans le cas où l'indicateur de direction (12) est activé et le véhicule est immobilisé et/ou l'angle de braquage inchangé, l'unité de commande (8) prévoit une future manœuvre de déplacement dans la direction indiquée par l'indicateur de direction (12) et prédéfinit un espace de circulation en tant que futur espace de circulation occupé à partir des valeurs mémorisées, et **en ce que** le futur espace de circulation occupé ainsi prédéfini, dans le cas d'un véhicule mobile, est transféré dans le futur espace de circulation occupé défini par l'angle de braquage effectif.

4. Procédé selon l'une des revendications précédentes, **caractérisé en ce que** le dispositif de commande (8), en plus de l'angle de braquage, interroge également cycliquement le tracé de parcours proposé par un système de navigation et utilise tout d'abord l'angle de braquage à adopter en cas de suivi du tracé de parcours proposé pour déterminer le futur espace de circulation occupé et **en ce que** le futur espace de circulation occupé ainsi adopté, dans le cas d'un véhicule mobile, est transféré dans le futur espace de circulation occupé défini par l'angle de braquage effectif.

5. Procédé selon l'une des revendications précédentes, **caractérisé en ce que** le dispositif de commande (8), avec des véhicules à remorques, en plus de l'angle de braquage, détermine également cycliquement l'angle du timon avant et l'angle du timon arrière du timon d'attelage et l'utilise pour la détermination du futur espace de circulation occupé.

6. Procédé selon l'une des revendications précédentes, **caractérisé en ce que** le dispositif de commande (8) superpose au moins une information supplémentaire à la projection du futur espace de circulation occupé.

7. Procédé selon la revendication 6, **caractérisé en ce que** la projection du futur espace de circulation occupé et de l'information supplémentaire est effectuée en alternance et/ou **en ce que** l'information superposée est une information graphique, en prévoyant de préférence que l'information graphique est un symbole STOP.

8. Arrangement pour mettre en oeuvre le procédé selon l'une des revendications précédentes, le dispositif de commande (8) présent étant un dispositif de traitement de données (9) qui, à partir d'au moins l'angle de braquage qu'il peut déterminer par le biais d'un capteur d'angle de braquage (10) et du sens de déplacement sélectionné, qu'il peut déterminer par le biais d'un dispositif de sélection de cran de marche (11) et d'un modèle de direction du véhicule enregistré dans une mémoire (19) du dispositif de commande (8), peut calculer le futur espace de circulation occupé au sein d'une durée pouvant être prédéfinie, le dispositif de commande (8), dans le cas des véhicules articulés, déterminant également l'angle d'articulation en plus de l'angle de braquage et l'utilisant pour la détermination du futur espace de circulation occupé, et au moins un dispositif de projection (4.1, 4.2, 4.3, 4.4) étant présent sur le véhicule, lequel est commandé avec l'information à propos du futur espace de circulation occupé de telle sorte que le futur espace de circulation occupé est affiché par une projection de lumière sur la surface de sol entourant le véhicule, la projection du futur espace de circulation occupé tenant compte d'un écart de sécurité.

9. Arrangement selon la revendication 8, **caractérisé en ce que** l'au moins un dispositif de projection (4.1, 4.2, 4.3, 4.4) comprend au moins une source laser qui émet une lumière laser et au moins un dispositif de déviation qui dévie le rayon laser au sein de limites prédéfinies, en prévoyant de préférence que la source laser peut être commandée pour ce qui concerne l'intensité du rayon laser.

10. Arrangement selon la revendication 9, **caractérisé en ce que** la commande de l'intensité et/ou de la déviation du rayon laser s'effectue de telle sorte que la dose de rayon en cas de balayage d'un œil humain par le rayon laser est inférieure à la dose dangereuse pour la santé de l'œil humain et/ou **en ce que** la commande de l'intensité et/ou de la déviation du rayon laser est configurée de telle sorte que le rayon laser balaye la surface identifiant le futur espace de circulation occupé à la manière d'une grille, en prévoyant de préférence que la commande de l'unité de déviation est configurée de telle sorte qu'au moins deux grilles successives sont choisies de manière à ce que les lignes des grilles se superposent.

11. Arrangement selon la revendication 9 ou 10, **caractérisé en ce que** la commande de l'unité de déviation est configurée de telle sorte que le rayon laser retrace par intermittence le contour de la surface identifiant le futur espace de circulation occupé et/ou **en ce que** la commande de l'unité de déviation est configurée de telle sorte que le rayon laser retrace continuellement le contour de la surface identifiant le futur espace de circulation occupé.

12. Véhicule, notamment véhicule utilitaire, comprend un arrangement selon l'une des revendications 8 à 11.
